# EUROPEAN PATENT SPECIFICATION

(11) **EP 1 419 954 B1**
(45) Date of publication and mention of the grant of the patent: **13.12.2006**
(21) Application number: 03023410.8
(22) Date of filing: 17.10.2003
(51) Int. Cl.: B62D 25/24

(54) **A closure plug for sealingly closing a hole in a structural member**
Verschlussstopfen für eine Öffnung in einem Bauteil
Bouchon d'obturation d'une ouverture dans un élément structurel

(30) Priority: 15.11.2002 DE 10253983
(43) Date of publication of application: 19.05.2004
(73) Proprietor: ITW Automotive Products GmbH & Co. KG, 58636 Iserlohn (DE)
(72) Inventor: Sbongk, Albert, 97996 Niederstetten (DE)
(74) Representative: Hauck, Graalfs, Wehnert, Döring, Siemons

(56) References cited:
- US-A- 4 885 121
- PATENT ABSTRACTS OF JAPAN vol. 1997, no. 02, 28 February 1997 (1997-02-28) -& JP 08 268451 A (PIOLAX INC), 15 October 1996 (1996-10-15)
- PATENT ABSTRACTS OF JAPAN vol. 1999, no. 13, 30 November 1999 (1999-11-30) -& JP 11 230348 A (KINUGAWA RUBBER IND CO LTD), 27 August 1999 (1999-08-27)
- PATENT ABSTRACTS OF JAPAN vol. 011, no. 076 (M-569), 7 March 1987 (1987-03-07) -& JP 61 233270 A (NISSAN MOTOR CO LTD;OTHERS: 01), 17 October 1986 (1986-10-17)
- PATENT ABSTRACTS OF JAPAN vol. 010, no. 222 (M-504), 2 August 1986 (1986-08-02) -& JP 61 059067 A (KINUGAWA RUBBER IND CO LTD), 26 March 1986 (1986-03-26)

## Description

The invention relates to a closure plug for the sealingly and acoustically dampening closing of a hole in a structural member, preferably of sheet metal.

### Background of the Invention

The manufacturing of bodies of automobiles involves the making of a plurality of openings or holes which eventually have to be closed by closure plugs. The closure plugs must be of a design such that they provide for a sealing effect so that foreign matters and humidity cannot pass through the hole from one side of the metal sheet to the other side. Humidity enclosed within the car body may result in corrosion. Since such holes form also so-called acoustic bridges, the closure plugs are to be designed such as to provide for acoustic dampening.

A great number of various closure plugs have become known. The closure plugs generally comprise a skirt-like shaft and a flange which sealingly engages the adjacent surface of the structural member. The shaft has at its outer surface, below the flange a circumferentially continous or discontinous undercut defined by a shoulder which engages the opposite side of the structural member. In this manner the closure plug is securely retained within the hole. Furthermore, the distance between the shoulder and the flange is dimensioned such that the flange is deflected outwards and upwards when the shaft is inserted into the hole, thereby generating a corresponding force for urging the flange against the structural member. Furthermore, it has become known to design the closure plug in the area of the flange such that deflection of the flange at the same time generates a radial force for urging a shaft portion against the wall of the hole.

These closure plugs of the prior art have proven to be satisfactory as to their function. With respect to holes of sufficient diameters these closure plugs may be readily, also manually, inserted into the holes. If, however, the closure plugs are to be used for holes having a diameter of 10 mm or less, the closure plugs of the prior art can be assembled only under extremely high forces or possibly not at all.

### Summary of the Invention

It is a primary object of the invention to provide a closure plug for the sealingly and acoustically dampening closing of a hole in a structural member of metal sheet material, which closure plug may be readily and simply, in particular manually, assembled also in holes of small diameter and nevertheless provide for sufficient sealing and acoustic dampening.

The closure plug of the present invention comprises a skirt-like shaft having a sealing portion with a smooth conical outer surface in the area of the sealing engagement. Such a design differs significantly from conventional closure plugs having a shaft which, as mentioned above, is provided externally with an undercut. The diameter of the conical portion always exceeds the diameter of the hole.

Of course, it is possible to provide a cylindrical portion of a diameter which exceeds the diameter of the hole; a suitable shape of the shaft in the remaining area ensures that the cylindrical portion can be pressed into the hole without any substantial forces.

The increased diameter of the cylindrical or conical sealing portion requires the material to be able to yield within this area. This is why the invention provides, on the inner side of the connection between the flange and the shaft, a free space which forms an annular shaft portion below the flange. The free space extends preferably up to the level of the sealing engagement or somewhat beyond thereof. In other words, the free space terminates axially on the side of the structural member opposite to the flange or in spaced relationship to this side. Inserting the shaft into the hole causes the material of the annular shaft portion to be deformed into the free space, whereby a circumferential groove is formed in the annular portion with the assistance of the hole wall so as to form said undercut.

In the closure plug of the invention the sealing engagement within the hole is generated by overdimensioning the outer diameter of the annular portion of the shaft, whereby the shaft is radially pressed against the hole wall. A further sealing effect is obtained by the flange being pressed against the adjacent surface of the structural member.

The closure plug of the invention, while providing for excellent sealing, may be readily manually assembled and still is securely retained within the hole of the structural member due to the formed undercut. The structure of the closure plug of the invention and the use of a suitable material allow to provide also for sufficient acoustic dampening. The acoustic dampening effect may be improved by using plug members of predetermined thickness. The acoustic dampening and sealing effects will not be detrimentally affected even by drastic temperature changes, for example from 100° C to -40° C or from -40° C to 100° C.

According to an aspect of the invention the material of the closure plug of the invention is a thermoplastic elastomeric material, preferably of high density. Furthermore, the thermoplastic elastomeric material is of a small pressure deformation remainder.

To facilitate insertion of the closure plug into the hole, a modification of the invention provides that the shank beneath the sealing portion has an entrance portion also including a conical outer surface, the diameter of the surface increasing towards the sealing portion and being smaller than the diameter of the hole.

To provide for optimal acoustic dampening, it is preferred to make the shaft of solid material. To this end an embodiment of the invention provides that the shank beneath the free space is annularly formed with a triangular cross-section of the annulus, one apex of the triangle facing towards the free end of the shank.

The length of the shaft may be relatively small, for example less than the maximal diameter of the shaft.

According to a further aspect of the invention, radially inwardly of the flange the shank is connected with a head portion, and the free space is formed by an annular recess of the head portion concentrically to the axis of the shank.. Preferably, the head portion is punch-shaped with an upper surface extending upwardly beyond the flange.

Urging a finger against the upper side of the head provides for sufficient pressure to insert the closure plug into the hole. When the cross-section of the annular shaft, as already mentioned, is of triangular shape, the pressure exerted upon the punch-shaped head generates a downwardly inclined and radially outwards directed force which allows effectively to press the shaft into the hole so as to form the groove in the shaft below the flange wherein the hole wall is engaged.

According to a further aspect of the invention, the annular recess has a width and the flange is formed such that the flange upon insertion of the plug body into the hole is deformed by the structural member approximately in the plane of the associated surface and an annular inner surface of the flange engages the outer surface of the head portion in that the annular shank portion connected to the flange is pivoted radially inwardly relative to the remaining portion of the shank.. When the closure plug is inserted as described, the material of the shaft is urged radially inwards and yields so as to be deformed inwards into the free space and downwards as well as upwards so as to form the above mentioned annular groove. At the same time the flange is deflected upwards; the point of gravity is disposed in the area of the lower terminal end of the annular portion of the shaft whereby the radially outer surface of the undercut inwardly limiting the flange is caused to engage the radially inner surface of the undercut so as to limit deflection thereof. This provides for sufficiently high pressing forces to urge the shaft against the wall of the hole and for sufficient forces to urge the flange against the adjacent surface of the structural member in order to develop a satisfactory sealing effect.

### Brief Description of the Drawing

For a full understanding of the nature and objects of the present invention reference should be made to the following detailed description of the invention which is to be read in conjunction with the associated drawings wherein:
Fig. 1 is a side elevation of a closure plug of the invention;
Fig. 2 is a top view of the closure plug in Fig. 1;
Fig. 3 is a cross-sectional view of the closure plug in Fig. 1 along the line 3-3, with the lefthand half of the plug being in its released condition and the righthand half of the closure plug being in its assembled condition.

### Detailed Description of the Invention

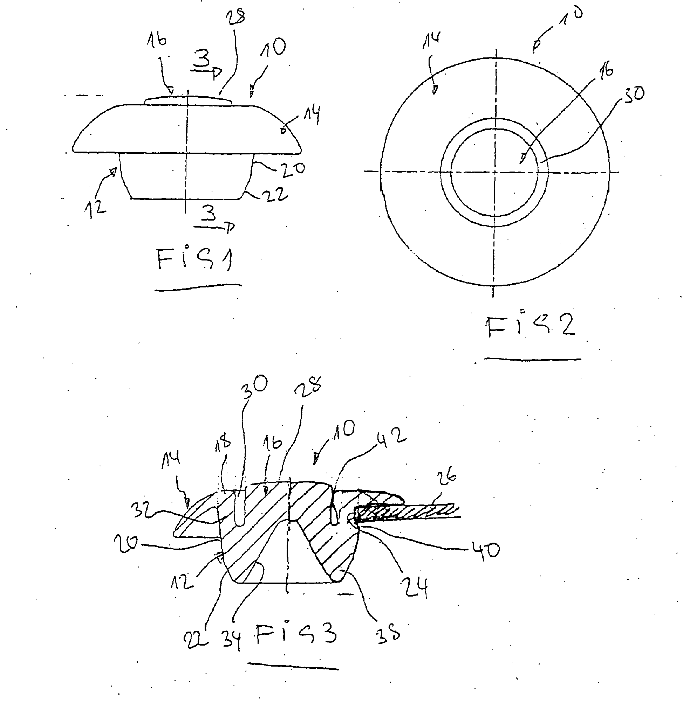

As shown in Figures 1 to 3, a closure plug member 10 comprises a skirt-like shaft 12, an annular flange 14, and a head 16. These parts are integrally formed of a thermoplastic elastomeric material of high density and low pressure deformation remainder.

As shown in Figures 1 and 3, the radial flange 14 when in its released condition has, towards head 16, an upper surface of slightly convex arcuate shape and a lower surface of slightly concave arcuate shape. The shaft 12 is integral therewith at the radially inner side of the annular or radial flange 14 at 18 and extends downwardly. An outer surface portion 20 of the shaft 12, which extends downwards from the underside of the connecting portion 18, is of conical shape and of a gradually downwardly decreasing diameter. This surface portion 20 merges into a further conical surface portion 22 which is also of a downwardly decreasing outer diameter. The surface portions 20, 22 are smoot, and the diameter of the surface portion 22 everywhere is smaller than the diameter of a hole 24 in a sheet metal 26. The diameter of the surface portion 20 exceeds the diameter of the hole 24 at least in the upper area adjacent the flange 14.

The head 16 is punch-shaped and has a slightly convex upper surface 28 disposed above the upper surface of the radial flange 14. An annular undercut 30 is formed between the punch-shaped head 16 and the connection portion i.e. juncture 18 of the radial flange 14. The annular undercut 30 extends for a certain axial length towards the underside of the shaft 12, preferably slightly beyond the underside of the metal sheet 26, when the closure plug member 10 has been inserted into the hole 14. The undercut 30 defines an annular sealing portion 32 of the shaft 12. Below the undercut 30 the shaft 12 comprises an annular solid portion of an approximately triangular cross-section, with the tip of the triangle being directed downwards. This geometrical shape results from a conical depression 34 being formed within the underside of the closure plug member 10. Altogether, the annular portion 32, the head 16, and the annular part of the shaft 12 below the undercut 30 each are of relatively substantial thickness.

The closure plug member 10 as shown is particularly suited for holes of small diameter, preferably below 10 mm. When it has been inserted into the hole 14, an insertion portion 38 disposed in the area of the conical surface portion 22 is intended to assist in "finding" the hole. Thereafter, a finger or thumb is used to exert a pressing force upon the arcuate surface 28. As a result thereof, the shaft 20 is pressed into the hole 24 which is of small diameter, while the respective portions of the shaft are deformed. In the area of the undercut 30 the material yields to be deformed into the undercut so as to form a shoulder 40 which ensures secure retention thereof within the hole 24. The annular portion 32 generates in this area a pressure directed radially outwards to provide in cooperation with the wall of the hole 24 for a sealing action. The radial flange 14 is deflected upwards into the plane of the upper surface of the metal sheet 26 as may be seen in Fig. 3. The annular portion 32 may be slightly deflected inwards at the level of the lower terminal end of the undercut 30. This causes the connection portion i.e. juncture 18 between the flange 14 and the annular portion 32 to engage the outer surface of the head 16 as shown at 42. This engagement at 42 resists any further deformation of the flange 14 whereby the pressing forces exerted upon the hole wall and the upper side of the metal sheet 26 will be of a predetermined value. Nevertheless, the closure plug member as shown may be pressed into the hole 24 manually without any further means.

The closure plug member 10 provides for fluidtight sealing within the hole 24. Furthermore, the closure plug member, due to its solid or massive design, provides for sufficient acoustic dampening.

## Claims

1. A closure plug of a resilient material to be used for the insertion into a hole (24) of predetermined diameter in a structural member (26) of flat material for a sealingly and acoustically dampening closing of the hole (24), the plug comprising a shaft (12) adapted to be inserted into the hole (24), a radial flange (14) integrally formed to one end of shaft (12), the flange (14) having a radially outwardly oblique or bent portion which sealingly engages an associated surface of the structural member (26) upon deflection when the shaft (12) is inserted into the hole (24), the shaft (12) being adapted to be retained in the hole (24) by a shoulder (40) cooperating with the wall of the hole (24), the shaft (12) in the area of the sealing engagement with the hole (24) having a sealing portion (32) which in the non-inserted state of the shaft (12) has a diameter which is larger than the diameter of the hole (26) and on the inner side of the juncture (18) of the flange (14) and shaft (12) an annular space (30) being provided which extends axially towards the other end of the shaft (12) at least up to the sealing portion, whereby beneath the flange (14) an annular shaft portion (32) is formed, **characterized in that** the sealing portion is formed by a smooth conical outer surface (20) having a diameter which increases towards the flange (14) at least in the area of the sealing engagement, the diameter being larger than that of the hole (24) and **in that** the material of the annular shank portion (32) is deformed into the annular space (30) when the shaft (12) is pressed into the hole (24) and the wall of the hole (24) forms a grove in the annular portion (32), the grove defining the shoulder (40).

2. The plug of claim 1, wherein the plug is formed of a thermoplastic elastomer of high density.

3. The plug of claim 2, wherein the thermoplastic elastomer has a small pressure deformation remainder.

4. The plug of one of the claims 1 to 3, wherein the shaft (12) beneath the sealing portion has an entrance portion also including a conical outer surface (22), the diameter of the surface (22) increasing towards the sealing portion and being smaller than the diameter of the hole (24).

5. The plug of one of the claims 1 to 4, wherein the shaft beneath the annular space (30) is annularly formed with a triangular cross-section of the annulus, one apex of the triangle facing towards the free end of the shaft.

6. The plug of one of the claims 1 to 5, wherein radially inwardly of the flange (14) the shaft is connected with a head portion (16), and the annular space (30) is formed by an annular recess of the head portion (16) concentrically to the axis of the shaft (12).

7. The plug of claim 6, wherein the head portion (14) is punch-shaped with an upper surface (28) extending upwardly beyond the flange (14).

8. The plug of claim 7, wherein the upper surface (28) of the punch-shaped head portion (16) is convex.

9. The plug of one of the claims 6 to 8, wherein the annular recess has a width and the flange (14) is formed such that the flange (14) upon insertion of the plug into the hole (24) is deflected by the structural member (26) approximately in the plane of the associated surface and an annular inner surface of the flange (14) engages the outer surface of the head portion (16) in that the annular shaft portion (32) connected to the flange (14) is pivoted radially inwardly relative to the remaining portion of the shaft (12).

## Patentansprüche

1. Verschlussstopfen aus einem elastischen Material, der zum Einführen in ein Loch (24) mit vorbestimmtem Durchmesser in einem Bauteil (26) aus Flachmaterial verwendet werden soll, um das Loch (24) dichtend und schalldämpfend zu verschließen, wobei der Stopfen einen Schaft (12), der geeignet ist, in das Loch (24) eingeführt zu werden, und einen radialen Flansch (14) aufweist, der einstückig an einem Ende des Schafts (12) angeformt ist und einen radial nach außen schrägen oder gebogenen Abschnitt hat, der eine zugeordnete Fläche des Bauteils (26) bei der Ablenkung dichtend in Eingriff nimmt, wenn der Schaft (12) in das Loch (24) eingeführt wird, wobei der Schaft (12) geeignet ist, durch einen mit der Wand des Lochs (24) zusammenwirkenden Absatz (40) im Loch (24) gehalten zu werden, und im Bereich des dichtenden Eingriffs in dem Loch (24) einen Dichtabschnitt (32) hat, dessen Durchmesser im nicht eingeführten Zustand des Schafts (12) größer als der Durchmesser des Lochs (24) ist, und wobei an der Innenseite der Verbindung (18) zwischen Flansch (14) und Schaft (12) ein ringförmiger Raum (30) vorgesehen ist, der sich axial zum anderen Ende des Schafts (12) mindestens bis zum Dichtabschnitt erstreckt, wodurch unter dem Flansch (14) ein ringförmiger Schaftabschnitt (32) gebildet wird, **dadurch gekennzeichnet, dass** der Dichtabschnitt durch eine glatte konische äußere Fläche (20) mit einem Durchmesser gebildet ist, der mindestens im Bereich des dichtenden Eingriffs zum Flansch (14) zunimmt, wobei der Durchmesser größer als der des Lochs (24) ist, und dass das Ma terial des ringförmigen Schaftabschnitts (32) in den ringförmigen Raum (30) deformiert wird, wenn der Schaft (12) in das Loch (24) gedrückt wird und die Wand des Lochs (24) eine den Absatz (40) definierende Nut im ringförmigen Abschnitt (32) bildet.

2. Stopfen nach Anspruch 1, wobei der Stopfen aus einem thermoplastischen Elastomer mit hoher Dichte gebildet ist.

3. Stopfen nach Anspruch 2, wobei das thermoplastische Elastomer einen kleinen Druckverformungsrest aufweist.

4. Stopfen nach einem der Ansprüche 1 bis 3, wobei der Schaft (12) unterhalb des Dichtabschnitts einen Einführabschnitt mit konischer Außenfläche (22) aufweist, wobei ihr zum Dichtabschnitt größer werdender Durchmesser kleiner ist als der Durchmesser des Lochs (24).

5. Stopfen nach einem der Ansprüche 1 bis 4, wobei der Schaft unterhalb des ringförmigen Raums (30) ringförmig mit dreieckförmigem Ringquerschnitt ist, wobei der Scheitel des Dreiecks zum freien Ende des Schafts hin weist.

6. Stopfen nach einem der Ansprüche 1 bis 5, wobei der Schaft radial innerhalb des Flanschs (14) mit einem Kopfabschnitt (16) verbunden ist und der ringförmige Raum (30) von einer ringförmigen Ausnehmung des Kopfabschnitts (16) gebildet ist, die konzentrisch zur Achse des Schafts (12) ist.

7. Stopfen nach Anspruch 6, wobei der Kopfabschnitt (14) stempelartig geformt ist mit einer Oberseite (28), die über den Flansch (14) nach oben hinaussteht.

8. Stopfen nach Anspruch 7, wobei die Oberseite (28) des stempelartigen Kopfabschnitts (16) konvex ist.

9. Stopfen nach einem der Ansprüche 6 bis 8, wobei die ringförmige Ausnehmung in ihrer Breite so bemessen und der Flansch (14) so ausgebildet ist, dass der Flansch (14) beim Einführen des Stopfens in das Loch (24) durch das Bauteil (26) annähernd in der Ebene der zugeordneten Fläche abgelenkt wird, und eine ringförmige Innenfläche des Flanschs (14) mit der Außenfläche des Kopfabschnitts (16) in Eingriff gelangt, indem der mit dem Flansch (14) verbundene ringförmige Schaftabschnitt (32) gegenüber dem übrigen Teil des Schafts (12) radial nach innen verschwenkt wird.

## Revendications

1. Bouchon d'obturation en matériau élastique destiné à être utilisé pour une insertion dans un trou (24) de diamètre prédéterminé dans un élément structurel (26) en matériau plat en vue d'une fermeture étanche et insonorisante du trou (24), le bouchon comprenant un fût (12) adapté pour être inséré dans le trou (24), un flasque radial (14) formé de façon intégrée à une extrémité du fût (12), le flasque (14) présentant une portion oblique ou courbe dirigée radialement vers l'extérieur qui établit un contact étanche avec une surface associée de l'élément structurel (26) suite à sa flexion lorsque le fût (12) est inséré dans le trou (24), le fût (12) étant adapté pour être retenu dans le trou (24) par un épaulement (40) coopérant avec la paroi du trou (24), le fût (12) présentant, dans la zone du contact étanche avec le trou (24), une portion d'étanchéité (32) qui, dans l'état non inséré du fût (12), présente un diamètre plus grand que le diamètre du trou (24) et, du côté intérieur de la jointure (18) du flasque (14) et du fût (12), un espace annulaire (30) étant ménagé qui s'étend axialement vers l'autre extrémité du fût (12) au moins jusqu'à la portion d'étanchéité, en conséquence de quoi une portion de fût annulaire (32) est formée sous le flasque (14), **caractérisé en ce que** la portion d'étanchéité est formée par une surface extérieure conique lisse (20) présentant un diamètre croissant vers le flasque (14) au moins dans la zone du contact étanche, le diamètre étant plus grand que celui du trou (24), et **en ce que** le matériau de la portion de fût annulaire (32) est déformé dans l'espace annulaire (30) lorsque le fût (12) est enfoncé dans le trou (24) et que la paroi du trou (24) forme une gorge dans la portion annulaire (32), la gorge définissant l'épaulement (40).

2. Bouchon selon la revendication 1, le bouchon étant constitué d'un élastomère thermoplastique à haute densité.

3. Bouchon selon la revendication 2, l'élastomère thermoplastique possédant une faible déformation résiduelle sous pression.

4. Bouchon selon l'une des revendications 1 à 3, le fût (12) étant doté sous la portion d'étanchéité d'une portion d'entrée comprenant également une surface extérieure conique (22), le diamètre de la surface (22) croissant vers la portion d'étanchéité et étant plus petit que le diamètre du trou (24).

5. Bouchon selon l'une des revendications 1 à 4, le fût sous l'espace annulaire (30) étant de forme annulaire avec une section droite triangulaire de l'anneau, un sommet du triangle faisant face à l'extrémité libre du fût.

6. Bouchon selon l'une des revendications 1 à 5, le fût étant relié radialement, intérieurement au flasque (14), avec une portion de tête (16) et l'espace annulaire (30) étant formé par un évidement annulaire de la portion de tête (16) concentrique à l'axe du fût (12).

7. Bouchon selon la revendication 6, la portion de tête (16) étant en forme de poinçon avec une surface supérieure (28) s'étendant vers le haut au-delà du flasque (14).

8. Bouchon selon la revendication 7, la surface supérieure (28) de la portion de tête (16) en forme de poinçon étant convexe.

9. Bouchon selon l'une des revendications 6 à 8, l'évidement annulaire présentant une largeur, et le flasque (14) une forme, telles que le flasque (14), suite à l'insertion du bouchon dans le trou (24), soit dévié par l'élément structurel (26) approximativement dans le plan de la surface associée et qu'une surface intérieure annulaire du flasque (14) vienne au contact de la surface extérieure de la portion de tête (16), la portion annulaire (32) du fût reliée au flasque (14) étant retournée radialement vers l'intérieur par rapport à la portion restante du fût (12).
